(19) Europäisches Patentamt
European Patent Office
Office européen des brevets

(11)  EP 0 608 911 B2

(12)  NEW EUROPEAN PATENT SPECIFICATION

(45) Date of publication and mention
of the opposition decision:
**30.01.2002  Bulletin 2002/05**

(45) Mention of the grant of the patent:
**31.03.1999  Bulletin 1999/13**

(21) Application number: **94103388.8**

(22) Date of filing: **02.11.1990**

(51) Int Cl.[7]: **A01N 43/80**
// (A01N43/80, 43:80)

(54) **Synergistic microbicidal combinations**

Synergetische mikrobizide Kombinationen

Combinaisons synergiques microbicides

(84) Designated Contracting States:
**AT BE CH DE DK ES FR GB GR IT LI LU NL SE**

(30) Priority: **03.11.1989  US 431367**

(43) Date of publication of application:
**03.08.1994  Bulletin 1994/31**

(62) Document number(s) of the earlier application(s) in
accordance with Art. 76 EPC:
**90312064.0 / 0 431 752**

(73) Proprietor: **ROHM AND HAAS COMPANY**
**Philadelphia, Pennsylvania 19106-2399 (US)**

(72) Inventor: **Hsu, Jemin Charles**
**Fort Washington, Pennsylvania 19034 (US)**

(74) Representative:
**Maiwald, Walter, Dr. Dipl.-Chem. et al**
**Maiwald Patentanwalts GmbH Postfach 33 05 23**
**80065 München (DE)**

(56) References cited:
**EP-A2- 0 302 701        EP-B1- 0 271 761**
**EP-B1- 0 315 464        US-A- 4 505 889**

- **CHEMICAL ABSTRACTS, vol. 109, no. 17, 24 October 1988, Columbus, Ohio, US; abstract no. 144602q, F.MOCHIZUKI 'Synergistic slime control by 4,5-dichloro-2-octylisothiazolin-3-one and a microbicide' page 272 ; & JP-A-62 270 506 (KURITA WATER INDUSTRIES LTD.) 24 November 1987**
- **CHEMICAL PATENTS INDEX, DOCUMENTATION ABSTRACTS JOURNAL Section Ch, Week 8930, Derwent Publications Ltd., London, GB; Class C07, AN 216455 & JP-A-1 153 604 (DAINIPPON INK CHEM KK) 15 June 1989**

Remarks:
The file contains technical information submitted after the application was filed and not included in this specification

## Description

This invention concerns microbicidal compositions which include an isothiazolone and another biocide, and which are intended to provide more effective and broader control of micro-organisms in various industrial systems and for household products, agricultural products, and biomedical products, etc. In particular, the present invention relates to the use of a composition of 2-n-octyl-4,5-dichloro-isothiazolin-3-one, hereinafter referred to as 4,5-dichloro-2-octyl-3-isothiazolone, with 2n-octyl-3-isothiazolone.

The term "microbicidal" (or "antimicrobial" or "biocidal") as used herein is intended to encompass, but is not restricted to, all bactericidal, fungicidal and algicidal activity.

Isothiazolones are described in U.S.-A-3,761,488; 4,105,431; 4,252,694; 4,265,899 and 4,279,762, and elsewhere. Their use as microbicides is well known. Synergistic compositions containing 4,5-dichloro-2-octyl-3-isothiazolone and a known microbicide are known from JP-A-62270506.

We have found that compositions formed from 4,5-dichloro-2-octyl-3-isothiazolone and 2n-octyl-3-isothiazolone afford unexpectedly good synergistic antimicrobial activity against a wide range of microorganisms: the disruptive action on the organisms by the two compounds together is unexpectedly greater than the sum of both compounds taken alone. This synergy does not arise from the expected activity of the components nor from the expected improvement in activity. As a result of the synergy, the effective dose required can be lowered, which is not only more economical but also increases safety margins. The synergistic compositions of the present invention provide more effective and broader control of microorganisms in a number of systems.

The present invention thus provides a composition having microbicidal activity which comprises 4,5-dichloro2-octy)-3-isothiazolone and 2n-octyl-3-isothiazolone wherein the weight ratio of 4,5-dichloro-2-octyl-3-isothiazolone to 2n-octyl-3-isothiazolone is from 32:1 to 1:32 excepting a technical mixture resulting from the chlorination of $\beta$, $\beta$'-dithio-bis-(propionic acid-N-octylamide) and consisting of

46.714 wt % 2n-octyl-isothiazolin-3-one,
1.143 wt % 4-chloro-2n-octyl-isothiazolin-3-one,
1.571 wt % 5- chloro-2n-octyl-isothiazolin-3-one,
33.000 wt % 4,5-dichloro-2n-octyl-isothiazolin-3-one,
0.286 wt % 4,4,5,5- tetrachloro-2n-octyl-isothiazolidin-3-one, and
17.286 wt % other compounds.

The excepted technical mixture is known from EP 0 271 761 B1, where it is used as a starting material for producing pure 2n-octyl-3-isothiazolone.

Important applications of the synergistic antimicrobial compositions of the present invention include but are not limited to: inhibiting the growth of bacteria and fungi in aqueous paints and coatings, adhesives, sealants, latex emulsions, and joint cements; preserving wood; preserving cutting fluids, controlling slime-producing bacteria and fungi in pulp and papermills and cooling towers; as a spray or dip treatment for textiles and leather to prevent mold growth; protecting paint films, especially exterior paints, from attack by fungi which occurs during weathering of the paint film; protecting processing equipment from slime deposits during manufacture of cane and beet sugar; preventing microorganism buildup and deposits in air washer or scrubber systems and in industrial fresh water supply systems; preserving fuel; controlling microorganisms contamination and deposits in oil field drilling fluids and muds, and in secondary petroleum recovery processes; preventing bacterial and fungal growth in paper coatings and coating processes; controlling bacterial and fungal growth and deposits during the manufacture of various specialty boards, e.g., cardboard and particle board; preventing sap stain discoloration on freshly cut wood of various kinds; controlling bacterial and fungal growth in clay and pigment slurries of various types; as a hard surface disinfectant to prevent growth of bacteria and fungi on walls, floors, etc.; as a preservative for cosmetic and toiletry raw materials, floor polishes, fabric softeners, household and industrial cleaners; in swimming pools to prevent algae growth; inhibiting the growth of harmful bacteria, yeasts, fungi on plants, trees, fruits, seeds, or soil; preserving agricultural formulations, electrodeposition systems, diagnostic and reagent products, medical devices; protecting animal dip compositions against the buildup of microorganisms, and in photoprocessing to prevent buildup of microorganisms, and the like.

The compositions of the invention may be added separately to any system or may be formulated as a simple mixture comprising the essential ingredients, and if desired a suitable carrier or solvent, or as an aqueous emulsion or dispersion.

The invention also provides a method of inhibiting or preventing the growth of bacteria, fungi or algae in a locus subject or susceptible to contamination thereby, comprising incorporating into or onto the locus in an amount effective to adversely affect the growth of said bacteria, fungi or algae any of the compositions defined above.

The compositions of the invention can be formulated as a solution in a wide range of organic solvents. The solutions generally contain about 5 to 30% by weight of the active composition. It is generally more convenient to provide the compositions in a water-diluted form: this may be accomplished by adding an emulsifier to the organic solution followed by dilution with water.

In general, the weight ratio of 4,5-dichloro-2-octyl-3-isothiazolone to 2n-octyl-3-isothiazolone may be in the range of from 32:1 to 1:32. The other specific and preferred ratios are given in the examples.

The synergism of two-component compositions is demonstrated by testing a wide range of concentrations and ratios of compounds generated by two-fold serial dilutions in a Trypticase Soy Broth (Difco) growth medium of a microbicide in one dimension and another microbicide in the second dimension, against a bacterium <u>Escherichia coli</u> (ATCC 11229), or fungi <u>Candida albicans</u> (ATCC 11651), <u>Asperqillus niger</u> (ATCC 6275), or <u>Aureobasidium pullulan</u> (ATCC 9348). Each test tube was inoculated to make about $1\text{-}5 \times 10^7$ bacteria per ml or $1\text{-}5 \times 10^5$ fungi per ml. The lowest concentrations of each compound or mixtures to inhibit visible growth (turbidity) at 37° for <u>E. coli</u> and at 30°C for the fungi for 7 days were taken as the minimum inhibitory concentration (MIC). The MIC were taken as end points of activity. End points for the mixtures of compound A (4,5 dichloro-2-octyl-3- isothiazolone) and compound B (2n-octyl-3-isothiazolone) were then compared with the end points for the isothiazolone A alone and compound B alone. Synergism was determined by a commonly used and accepted method described by Kull, F.C.; Eisman, P.C.; Sylwestrowicz, H.D. and Mayer, R.L., in applied Microbiology 9:538-541 (1961) using the ratio determined by

$$Qa/QA + Qb/QB = \text{Synergy Index (SI)}$$

wherein

QA = concentration of compound A in parts per million (ppm), acting alone, which produced an end point.
Qa = concentration of compound A in ppm, in the mixture, which produced an end point.
QB = concentration of compound B in ppm, acting alone, which produced an end point.
Qb = concentration of compound B in ppm, in the mixture, which produced an end point

when the sum of Qa/QA and Qb/QB is greater than one, antagonism is indicated. When the sum is equal to one additivity is indicated, and when less than one synergism is demonstrated.

The test results for demonstration of synergism of microbicide combinations are shown in Table 1. This table concerns the combination of 4,5-dichloro-2-octyl-3-isothiazolone and 2n-octyl-3-isothiazolone, and shows:

1. test against <u>E. coli</u>, <u>C. albicans</u> (C. alb), <u>A. niger</u> or <u>A. pullulan</u> (A. pullul)
2. the end-point activity in ppm measured by MIC for compound A alone (QA), for compound B alone (QB), for compound A in the mixture (Qa), or for compound B in the mixture (Qb);
3. the calculation of synergy index (SI) based on the formula SI=Qa/QA + Qb/QB, and the weight ratio of 4,5-dichloro 2-n-octyl-3-isothiazolone (compound A) to 2n-octyl-3-isothiazolone (compound B) in the particular combination (A:B);
4. the range of weight ratios for synergism and the preferred weight ratios. It will be appreciated by those skilled in the art that the ratios given are approximate only.

The MIC values of each compound tested alone (QA or QB) are end-point activities except where the value is expressed as x. 10. In these cases, the end-point activity was not seen at the highest tested concentration. For purpose of calculation of the synergy index and for operational definition of MIC, the reported value is twice the highest tested concentration. The value could be an underestimate of the true MIC; thus, the true synergy index could be even lower.

TABLE 1

| Compound A = 4,5-dichloro-2-octyl-3-isothiazolone | | | | | | | | |
|---|---|---|---|---|---|---|---|---|
| Compound B = 2-n-octyl-3-isothiazolone | | | | | | | | |
| | end-point activity in ppm | | | | calculations | | | |
| ORGANISM | QA | QB | Qa | Ob | Qa/QA | Qb/QB | SI | A:B |
| C. alb | 16.00 | 4.00 | 0.25 | 2.00 | 0.02 | 0.50 | 0.52 | 1:8 |
| | 16.00 | 4.00 | 0.50 | 1.00 | 0.03 | 0.25 | 0.28 | 1:2 |
| C. alb | 4.00 | 1.00 | 1.00 | 0.50 | 0.25 | 0.50 | 0.75 | 2:1 |
| | 4.00 | 1.00 | 2.00 | 0.06 | 0.50 | 0.06 | 0.56 | 32:1 |

TABLE 1   (continued)

| ORGANISM | end-point activity in ppm | | | | calculations | | | |
|---|---|---|---|---|---|---|---|---|
|  | QA | QB | Qa | Ob | Qa/QA | Qb/QB | SI | A:B |
| C. alb | 4.10 | 1.00 | 2.00 | 0.50 | 0.49 | 0.50 | 0.99 | 4:1 |
| C. alb | 32.10 | 2.00 | 16.00 | 1.00 | 0.50 | 0.50 | 1.00 | 16:1 |
| E. coli | 16.00 | 250.00 | 4.00 | 125.00 | 0.25 | 0.50 | 0.75 | 1:32 |
| E. coli | 16.00 | 125.00 | 8.00 | 31.00 | 0.50 | 0.25 | 0.75 | 1:4 |
| A. pullul | 16.10 | 8.00 | 4.00 | 4.00 | 0.25 | 0.50 | 0.75 | 1:1 |
|  | 16.10 | 8.00 | 8.00 | 1.00 | 0.50 | 0.13 | 0.62 | 8:1 |
| Synergistic ratios of compound A:compound B range from 32:1 to 1:32; preferred ratios are in the range of 8: 1 to 1:2. | | | | | | | | |

As can be seen by review of Table 1, the composition of the invention demonstrate synergistic microbicidal activity as measured by minimum inhibitory concentrations (MIC) and show surprisingly greater activity than the algebraic sum of the individual components which make up each composition.

In contrast, an example of non-synergistic combination of 4,5-dichloro-2-octyl-3-isothiazolone and sodium dichlorophene is shown in Table 12. In this example of non-synergism, the microbial activities of either component as measured against E. coli and C. albicans are not affected by the presence or the absence of the other component in the combination. It is also not antagonistic because no loss of activity of either component in the combination was detected.

The synergistic activities of the compositions of the invention in most cases are applicable to bacteria, fungi, and a mixture of bacteria and fungi. Thus, the combinations not only lower the use-level of biocide but also broaden the spectrum of activity. This is especially useful in situations where either component alone does not achieve the best results due to weak activity against certain organisms.

TABLE 12

| (comparative) | | | | | | | | |
|---|---|---|---|---|---|---|---|---|
| Compound A = 4,5-dichloro-2-octyl-3-isothiazolone | | | | | | | | |
| Compound B = Sodium dichlorophene | | | | | | | | |
| ORGANISM | end-point activity in ppm | | | | calculations | | | |
|  | QA | QB | Qa | Qb | Qa/QA | Qb/QB | SI | A:B |
| C. alb | 4.10 | 16.00 | No effect |  |  |  |  |  |
| C. alb | 16.00 | 32.00 | No effect |  |  |  |  |  |
| E. coli | 16.00 | 62.00 | No effect |  |  |  |  |  |

**Claims**

1.  A microbicidal composition comprising 4,5-dichloro-2-octyl-3isothiazolone and 2n-octyl-3-isothiazolone in the weight ratio of 32:1 to 1:32, excepting a technical mixture resulting from the chlorination of β, β'-dithio-bis-(propionic acid-N-octylamide) and consisting of

    46.714 wt % 2n-octyl-isothiazolin-3-one,
    1.143 wt % 4-chloro-2n-octyl-isothiazolin-3-one,
    1.571 wt % 5- chloro-2n-octyl-isothiazolin-3-one,
    33.000 wt % 4,5-dichloro-2n-octyl-isothiazolin-3-one,
    0.286 wt % 4,4,5,5- tetrachloro-2n-octyl-isothiazolidin-3-one, and
    17.286 wt % other compounds.

2.  Composition according to claim 1, wherein the ratio of 4,5-dichloro-2-octyl-3-isothiazolone to 2n-octyl-isothiazolone is from 8:1 to 1:2.

3.  A microbicidal product containing from 5 to 30 % of a composition comprising 4,5-dichloro-2-octyl-3-isothiazolone and 2n-octyl-3-isothiazolone in the weight ratio of 32:1 to 1:32, a solvent and preferably an emulsifier and water, excepting a 25.92 wt % solution in ethyl acetate of a technical mixture resulting from chlorination of β, β'-dithio-bis-(propionic acid-N-octylamide) and consisting of

46.714 wt % 2n-octyl-isothiazolin-3-one,
1.143 wt % 4-chloro-2n-octyl-isothiazolin-3-one,
1.571 wt % 5- chloro-2n-octyl-isothiazolin-3-one,
33.000 wt % 4,5-dichloro-2n-octyl-isothiazolin-3-one,
0.286 wt % 4,4,5,5- tetrachloro-2n-octyl-isothiazolidin-3-one, and
17.286 wt % other compounds.

4. Use of a composition comprising 4,5-dichloro-2n-octyl-3-isothiazolone and 2n-octyl-3-isothiazolone in the weight ratio of 32:1 to 1:32 in a microbicidal product.

5. A method for inhibiting or preventing the growth of bacteria, fungi, or algae in a locus subject or susceptible to contamination which comprises incorporating onto or into the locus, in an amount which is effective to adversely affect the growth of said bacteria, fungi, or algae, a composition comprising 4,5-dichloro-2-octyl-3-isothiazolone and 2n-octyl-3-isothiazolone in the weight ratio of 32:1 to 1:32.

**Patentansprüche**

1. Mikrobizide Zusammensetzung umfassend 4,5-Dichlor-2-octyl-3-isothiazolon und 2n-Octyl-3-isothiazolon im Gewichtsverhältnis von 32:1 bis 1:32 mit Ausnahme einer technischen Mischung welche aus der Chlorierung von β, β'-Dithio-bis(propionsäure-N-octylamid) resultiert und aus

46,714 Gew.-% 2n-Octylisothiazolin-3-on,
1,143 Gew.-% 4-Chlor-2n-octylisothiazolin-3-on,
1,571 Gew.-% 5-Chlor-2n-octylisothiazolin-3on,
33,000 Gew.-% 4,5-Dichlor-2n-octylisothiazolin-3-on,
0,286 Gew.-% 4,4,5,5-Tetrachlor-2n-octylisothiazolidin-3-on, und
17,286 Gew.-% anderer Verbindungen besteht.

2. Zusammensetzung nach Anspruch 1,
**dadurch gekennzeichnet, dass** das Verhältnis von 4,5-Dichlor-2-octyl-3-isothiazolon zu 2n-Octyl-isothiazolon von 8:1 bis 1:2 beträgt.

3. Mikrobizides Produkt, enthaltend 5 bis 30% einer Zusammensetzung umfassend 4,5-Dichlor-2-octyl-3-isothiazolon und 2n-Octyl-3-isothiazolon im Gewichtsverhältnis von 32:1 bis 1:32, ein Lösungsmittel und vorzugsweise einen Emulgator und Wasser, mit Ausnahme einer 25,92 Gew.-%igen Lösung einer technischen Mischung in Ethylacetat, welche von der Chlorierung von β, β'-Dithio-bis(propionsäure-N-octylamid) resultiert und aus

46,714 Gew.-% 2n-Octylisothiazolin-3-on,
1,143 Gew.-% 4-Chlor-2n-octylisothiazolin-3-on,
1,571 Gew.-% 5-Chlor-2n-octylisothiazolin-3on,
33,000 Gew.-% 4,5-Dichlor-2n-octylisothiazolin-3-on,
0,286 Gew.-% 4,4,5,5-Tetrachlor-2n-octylisothiazolidin-3-on, und
17,286 Gew.-% anderer Verbindungen besteht.

4. Verwendung einer Zusammensetzung umfassend 4,5-Dichlor-2n-octyl-3-isothiazolon und 2-n-Octyl-3-isothiazolon im Gewichtsverhältnis von 32:1 bis 1:32 in einem mikrobiziden Produkt.

5. Verfahren zur Inhibierung oder Verhinderung des Wachstums von Bakterien, Pilzen oder Algen in einem Ort, der damit verunreinigt oder gegenüber Verunreinigung empfindlich ist, durch Einbringen einer Zusammensetzung umfassend 4,5-Dichlor-2-octyl-3-isothiazolon und 2n-Octyl-3-isothiazolon im Gewichtsverhältnis von 32:1 bis 1:32 auf oder in den Ort in einer solchen Menge, dass das Wachstum der Bakterien, Pilze oder Algen nachteilig beeinflusst wird.

**Revendications**

1.  Composition microbicide comprenant de la 4,5-dichloro-2-octyl-3-isothiazolone et de la 2-n-octyl-3-isothiazolone, dans un rapport pondéral de 32:1 à 1:32, à l'exception d'un mélange technique résultant de la chloration de β,β'-dithio-bis(acide propionique-N-octylamide) et renfermant :

    46,714 % en poids de 2n-octyl-isothiazolin-3-one,
    1,143 % en poids de 4-chloro-2n-octyl-isothiazolin-3-one,
    1,571 % en poids de 5-chloro-2n-octyl-isothiazolin-3-one,
    33,000 % en poids de 4,5-dichloro-2n-octyl-isothiazolin-3-one,
    0,286 % en poids de 4,4,5,5-tétrachloro-2n-octyl-isothiazolidin-3-one, et
    17,286 % en poids d'autres composés.

2.  Composition selon la revendication 1, dans laquelle le rapport de la 4,5-dichloro-2-octyl-3-isothiazolone à la 2-n-octyl-3-isothiazolone est de 8:1 à 1:2.

3.  Produit microbicide contenant de 5 à 30 % d'une composition renfermant de la 4,5-dichloro-2-octyl-3-isothiazolone et de la 2n-octyl-3-isothiazolone dans un rapport pondéral de 32:1 à 1:32, un solvant et de préférence un émulsifiant et de l'eau, à l'exception d'une solution à 25,92 % en poids dans l'acétate d'éthyle d'un mélange technique résultant de la chloration de β,β'-dithio-bis(acide propionique-N-octylamide) et renfermant :

    46,714 % en poids de 2n-octyl-isothiazolin-3-one,
    1,143 % en poids de 4-chloro-2n-octyl-isothiazolin-3-one,
    1,571 % en poids de 5-chloro-2n-octyl-isothiazolin-3-one,
    33,000 % en poids de 4,5-dichloro-2n-octyl-isothiazolin-3-one,
    0,286 % en poids de 4,4,5,5-tétrachloro-2n-octyl-isothiazolidin-3-one, et
    17,286 % en poids d'autres composés.

4.  Utilisation d'une composition comprenant de la 4,5-dichloro-2n-octyl-3-isothiazolone et de la 2n-octyl-3-isothiazolone dans un rapport pondéral de 32:1 à 1:32 dans un produit microbicide.

5.  Procédé pour inhiber ou prévenir la croissance des bactéries, champignons ou algues dans un lieu sujet à ou susceptible de contamination qui consiste à incorporer sur ou dans le lieu, en une quantité qui est efficace pour affecter négativement la croissance desdites bactéries, champignons ou algues, une composition comprenant de la 4,5-dichloro-2-octyl-3-isothiazolone et de la 2n-octyl-3-isothiazolone dans un rapport pondéral de 32:1 à 1:32.